(19) Europäisches Patentamt

European Patent Office

Office européen des brevets

(11) **EP 1 382 126 B1**

(12) **EUROPÄISCHE PATENTSCHRIFT**

(45) Veröffentlichungstag und Bekanntmachung des Hinweises auf die Patenterteilung:
**20.09.2006  Patentblatt 2006/38**

(21) Anmeldenummer: **01969381.1**

(22) Anmeldetag: **13.07.2001**

(51) Int Cl.:
***H04B 1/00*** (2006.01)

(86) Internationale Anmeldenummer:
**PCT/EP2001/008106**

(87) Internationale Veröffentlichungsnummer:
**WO 2002/025821 (28.03.2002 Gazette 2002/12)**

(54) **VERFAHREN ZUR MESSUNG VON UNIDIREKTIONALEN ÜBERTRAGUNGSEIGENSCHAFTEN, WIE PAKETLAUFZEIT, LAUFZEITSCHWANKUNGEN UND DER HIERAUS ABLEITBAREN ERGEBNISSE, IN EINEM DATENNETZ**

METHOD FOR MEASURING UNIDIRECTIONAL TRANSMISSION CHARACTERISTICS SUCH AS PACKET PROPAGATION TIME, FLUCTUATIONS IN PROPAGATION TIME AND THE RESULTS WHICH CAN BE DERIVED FROM THIS, IN A TELECOMMUNICATIONS NETWORK

PROCEDE DE MESURE DES CARACTERISTIQUES DE TRANSMISSION UNIDIRECTIONNELLE, COMME LE TEMPS DE PROPAGATION D'UN PAQUET, LES VARIATIONS DU TEMPS DE PROPAGATION ET LES RESULTATS QUI EN DECOULENT, DANS UN RESEAU DE TELECOMMUNICATION

(84) Benannte Vertragsstaaten:
**AT BE CH CY DE DK ES FI FR GB GR IE IT LI LU MC NL PT SE TR**

(30) Priorität: **19.09.2000   DE 10046240**

(43) Veröffentlichungstag der Anmeldung:
**21.01.2004   Patentblatt 2004/04**

(73) Patentinhaber: **Deutsche Telekom AG
53113 Bonn (DE)**

(72) Erfinder:
• **DÖRKEN, Heinrich
  64293 Darmstadt (DE)**
• **MENDE, Joachim
  64347 Griesheim (DE)**

(56) Entgegenhaltungen:
EP-A- 0 716 525          GB-A- 2 300 789
US-A- 5 923 902          US-A- 5 963 943
US-A- 6 104 729

• **GRAHAM I ; DONNELLY S : "Comparative measurement of QoS on the trans-Pacific Internet " PROC. SPIE - INT. SOC. OPT. ENG. (USA), PROCEEDINGS OF THE SPIE - THE INTERNATIONAL SOCIETY FOR OPTICAL ENGINEERING , 2. - 4. November 1998, Seiten 289-294, XP008008877 Boston, MA, USA**

• **FASBENDER A ET AL: "On assessing unidirectional latencies in packet-switched networks" COMMUNICATIONS, 1997. ICC '97 MONTREAL, TOWARDS THE KNOWLEDGE MILLENNIUM. 1997 IEEE INTERNATIONAL CONFERENCE ON MONTREAL, QUE., CANADA 8-12 JUNE 1997, NEW YORK, NY, USA,IEEE, US, 8. Juni 1997 (1997-06-08), Seiten 490-494, XP010227065 ISBN: 0-7803-3925-8**

• **CLARK M ET AL: "Application-level measurements of performance on the vBNS" MULTIMEDIA COMPUTING AND SYSTEMS, 1999. IEEE INTERNATIONAL CONFERENCE ON FLORENCE, ITALY 7-11 JUNE 1999, LOS ALAMITOS, CA, USA,IEEE COMPUT. SOC, US, 7. Juni 1999 (1999-06-07), Seiten 362-366, XP010342539 ISBN: 0-7695-0253-9**

• **YUMING JIANG ET AL: "Providing Quality of Service Monitoring: Challenges and Approaches" CONFERENCE PROCEEDINGS ARTICLE , XP010376678**

- SHIBATA Y ET AL: "The end-to-end performance of multimedia information services: data analysis and simulation" SYSTEM SCIENCES, 1989. VOL.II: SOFTWARE TRACK, PROCEEDINGS OF THE TWENTY-SECOND ANNUAL HAWAII INTERNATIONAL CONFERENCE ON KAILUA-KONA, HI, USA 3-6 JAN. 1989, WASHINGTON, DC, USA,IEEE COMPUT. SOC. PR, US, 3. Januar 1989 (1989-01-03), Seiten 838-847, XP010014973 ISBN: 0-8186-1912-0
- DEMPSEY B J ET AL: "On retransmission-based error control for continuous media traffic in packet-switching networks" COMPUTER NETWORKS AND ISDN SYSTEMS, NORTH HOLLAND PUBLISHING. AMSTERDAM, NL, Bd. 28, Nr. 5, 1. März 1996 (1996-03-01), Seiten 719-736, XP004006598 ISSN: 0169-7552
- KAWANO S ET AL: "Integrated utilization of heterogeneous database systems through a data network" DIGITAL COMMUNICATIONS, 1988. MAPPING NEW APPLICATIONS ONTO NEW TECHNOLOGIES, 1988 INTERNATIONAL ZURICH SEMINAR ON ZURICH, SWITZERLAND 8-10 MARCH 1988, ZURICH, SWITZERLAND,IEEE, 8. März 1988 (1988-03-08), Seiten 253-259, XP010000034 ISBN: 3-908265-01-0

**Beschreibung**

Die Erfindung betrifft ein Verfahren zur Messung der unidirektionalen Übertragungseigenschaften, wie Paketlaufzeit, Laufzeitschwankungen und der hieraus ableitbaren Ergebnisse, in einem Telekommunikationsnetz gemäß Patentanspruch 1.

Es ist bekann, Messungen der unidirektionalen Übertragungseigenschaften, wie Paketlaufzeit, Laufzeitschwankungen oder ähnliches, in einem Telekommunikationsnetz, wie Internet, Intranet oder ähnliches, zwischen zumindest zwei Messrechnern durchzuführen. Hierbei werden von einem ersten Messrechner ein Testpaket zu einem anderen zweiten Messrechner übertragen, wobei der erste Messrechner den zeitlichen Abgang des abgehenden Testpaketes erfasst und diese Uhrzeit mit dem Testpaket mit übermittelt und der zweite Messrechner den zeitlichen Eingang des Testpakets erfasst und durch Differenzbildung zwischen der Uhrzeit des Abgangs von dem ersten Messrechner und der Uhrzeit des Eingangs in dem zweiten Messrechner die Laufzeit des Testpakets - Messergebnis - ermittelt. Die Uhrzeit des Abgangs von dem ersten Messrechner erkennt der zweite Messrechner aus dem

Die zeitmarken können durch verschiedene Verfahren gewonnen werden: vor dem Absenden des Testpaketes ermitteln die Messrechner von einem dritten Rechner über das Telekommunikationsnetz die Uhrzeit. Der dritte Rechner gibt somit die Referenzzeit für die beiden Messrechner vor.

Problematisch bei diesem Verfahren ist jedoch, dass es zu Zeitschwankungen aufgrund unterschiedlicher Übermittlungszeiten der Uhrzeit an die Messrechner kommt. Die Messergebnisse werden dadurch ungenau und können zur Qualitätsbetrachtung der unidirektionalen Übertragungseigenschaften in einem Telekommunikationsnetz nicht verwendet werden.

Des Weiteren sind auch die bekannten Umlaufmessungen im Telekommunikationsnetz, also Messung der Paketlaufzeit von dem ersten Messrechner über den zweiten Messrechner und zurück, viel zu ungenau, da eine symmetrische Verbindung zwischen den beiden Messrechnern nicht vorausgesetzt werden kann. Beispielsweise kann die Verbindung von dem ersten Messrechner zu dem zweiten Messrechner einen ersten Weg nehmen und die Verbindung von dem zweiten Messrechner zu dem ersten Messrechner einen zweiten Weg, der ungleich dem ersten Weg ist. Insofern sind auch Aussagen über die Paketlaufzeiten bei diesen Messverfahren für eine Betrachtung der unidirektionalen Übertragungseigenschaften nicht brauchbar, wenn man die Paketlaufzeit der Umlaufmessung durch zwei dividieren würde, um eine unidirektionale Laufzeit zu erhalten.

Die Realisierung neuer Dienste im Telekommunikationsnetz, insbesondere dem Internet, erfordert aber eine mehr oder weniger garantierte Übertragungsrate, beispielsweise für die Übertragung von Druckaufträgen an Druckereien. Gefordert wird auch eine obere Grenze für Paketverzögerung und Laufzeitschwankung, z. B. für IP-Telefonie- und Videokonferenz.

Das entscheidende Qualitätsmerkmal ist dabei aber die unidirektionale Paketlaufzeit, die daraus ableitbaren Laufzeitschwankungen, die Paketverluste, der Durchsatz und die Erreichbarkeit.

Hieraus ist es dann möglich, dem Kunden für einen oder mehrere dieser Parameter Maximalwerte für Paketlaufzeiten, Laufzeitschwankungen und Verluste und/oder Minimalwerte für den Durchsatz zuzusichern. Zudem muss die Einhaltung dieser Werte vom Diensteanbieter und dem Kunden überprüfbar sein.

Die unidirektionale Paketlaufzeit entspricht dabei der Differenz zwischen dem Zeitpunkt $t_1$, wenn das erste Bit eines Testpakets von einem ersten Messrechner gesendet wurde, und dem zweiten Zeitpunkt $t_2$, wenn das letzte Bit des Testpakets von dem zweiten Messrechner empfangen wurde. Die Paketlaufzeit $D_{netz}$ in einem Telekommunikationsnetzwerk ergibt sich damit zu $D_{netz} = t_2 - t_1$.

Unter unidirektionalen Laufzeitschwankungen versteht man die Differenzen zwischen den unterschiedlichen Laufzeiten der Testpakete von einem ersten Messrechner - Quelle - zum zweiten Messrechner - Senke. Die Laufzeitschwankung wird immer nur für eine Übertragungsrichtung betrachtet.

Bei der Definition wird noch folgende Unterscheidung gemacht:

Auf der einen Seite wird von einer definierten Quelle oder einem ersten Messpunkt zu einer definierten Senke oder einem zweiten Messpunkt ein Paar von Testpaketen übertragen. Dann ist die Laufzeitschwankung die Differenz zwischen der gemessenen Laufzeit des zweiten Testpakets und der gemessenen Laufzeit des ersten Testpakets des gesendeten Paares von Testpaketen.

Auf der anderen Seite wird ein Strom von Testpaketen von einer definierten Quelle oder einem ersten Messpunkt zu einer definierten Senke oder einem zweiten Messpunkt übertragen. Ein Paketstrom wird dabei durch logisch aufeinanderfolgende Testpakete gebildet, - numerierte Pakete -, die in einer festen Reihenfolge übertragen werden. Dabei ist die Laufzeitschwankung die Differenz zwischen der gemessenen unidirektionalen Laufzeit eines Testpakets und der gemessenen Laufzeit des Vorgängerpakets. Allgemein gilt:

$t_{jitter} - D_n - D_{n-1}$. $D_n$ ist die unidirektionale Laufzeit des Testpaketes n und $D_{n-1}$ die Laufzeit des Paketes n-1. $t_{jitter}$ ist dann die Laufzeitschwankung. Das Auftreten der Laufzeitschwankung ist eine unmittelbare Folge von verschiedenen Laufzeiten der Testpakete.

Unter einem Paketverlust wird verstanden, wenn das erste Bit eines einzelnen Testpaketes, das von einer definierten Quelle zu einer definierten Senke gesendet wird, die Senke nicht erreicht. Von einem Paketverlust spricht man weiterhin, wenn ein Testpaket, das beim Empfänger eintrifft, aber bei dem mindestens ein Bit verfälscht ist, oder ein Testpaket, dessen Laufzeit einen vorbestimmten Zeitraum, beispielsweise 255 Sekunden, überschreitet.

Betrachtet wird dabei nur eine Übertragungsrichtung. Die Messdaten werden erfasst, indem ein empfangenes Testpaket als "1" zählt, ein Paketverlust als "0". Der Paketverlust wird über ein definiertes Zeitintervall gemessen. Beim Empfänger ist bei der Wahl des Messintervalls die Verzögerung durch Laufzeit zu berücksichtigen.

Der Erfindung liegt die Aufgabe zugrunde, ein Verfahren zur Messung der unidirektionalen Übertragungseigenschaften, wie Paketlaufzeit, Laufzeitschwankungen und der hieraus ableitbaren Ergebnisse in einem Telekommunikationsnetz derart weiterzubilden, dass unter Vermeidung der genannten Nachteile eine präzisere Messung ermöglicht wird.

Diese Aufgabe wird durch den Patentanspruch 1 gelöst.

Der Erfindung liegt die Erkenntnis zugrunde, dass von entscheidender Bedeutung für die Qualität des Messergebnisses die Qualität der Abstimmung der Uhrzeiten in den beiden Messrechnern ist.

Nach der Erfindung werden daher die beiden Messrechner für die Ermittlung des Messergebnisses zeitlich synchronisiert, indem durch Satellitensysteme, beispielsweise GPS (global positioning system), beiden Messrechnern fortlaufend die von mehreren Satelliten gesendete Uhrzeit übermittelt wird. Hierdurch wird auf einfache Weise erreicht, dass beide Messrechner die gleichen Uhrzeiten aufweisen und die durch Diffrenzbildung ermittelte Zeit zwischen dem Abgang des Testpakets und dem Eingang des Testpakets der tatsächlichen Paketlaufzeit entspricht. Das Satellitensystem dient somit als Zeitgeber für die Messrechner. Diese Zeitmarken können mit einem Fehler von $\pm$ 1/2 Mikronsekunden erzeugt werden.

Gemäß einer Ausführungsform der Erfindung, wird das Messergebnis, also die Differenz der ersten Zeitmarke - Uhrzeit des Abgangs des Testpaketes vom ersten Messrechner- und der zweiten Zeitmarke - Uhrzeit des Eingangs des Testpakets beim zweiten Messrechner - in einer Datenbank abgelegt. Jeder berechtigte Nutzer kann vorzugsweise dann die Messergebnisse von der Datenbank über das Telekommunikationsnetz abfragen. Hierdurch wird gewährleistet, dass die Kunden aber auch die Netzbetreiber jederzeit die Qualität der unidirektionalen Datenübertragung von dem ersten Messrechner zum zweiten Messrechner abfragen können und gegebenenfalls, beispielsweise bei Überschreiten von vorbestimmten Grenzwerten, entsprechende Maßnahmen zur Qualitätssicherung ergreifen können.

Damit nur berechtigte Nutzer die Messergebnisse abfragen können, ist für den berechtigten Nutzer in der Datenbank eine Kennung hinterlegt. Nach Übermittlung der Kennung durch den berechtigten Nutzer wird die Abfrage der Messergebnisse von der Datenbank freigegeben. Auf einfache Weise können hierdurch vorbestimmte Personen definiert werden, die die Messergebnisse abfragen dürfen.

Gemäß einer weiteren Ausführungsform der Erfindung werden von dem zweiten Messrechner die Messergebnisse über das Telekommunikationsnetz zur Datenbank übermittelt. Hierdurch werden die Messergebnisse nicht in dem Messrechner gespeichert, der möglicherweise hierdurch in seinem Messverhalten beeinträchtigt werden könnte.

Zur Feststellung von Laufzeitschwankungen werden mindestens zwei Testpakete hintereinander von dem ersten Messrechner zu dem zweiten Messrechner gesandt. Die Differenz der Laufzeiten der beiden Testpakete ergibt die Laufzeitschwankung.

Um ein lückenloses Bild über die Qualität der unidirektionalen Messverbindung von dem ersten Messrechner zu dem zweiten Messrechner zu erhalten, werden fortlaufend Testpakete von dem ersten Messrechner zu dem zweiten Messrechner übermittelt. Damit es zu keinen Messverfälschungen durch Einschwingen der Hard- und Software kommt, variiert der zeitliche Abstand des Abgangs der Testpakete von dem ersten Messrechner.

Die Information, zu welchen Zeitpunkten kommt es zu welchen Messergebnissen, ist für die Wartung und Aufrechterhaltung des Qualitätsstandards wichtig. Es werden daher den Messergebnissen Datums- und Uhrzeitangaben zugeordnet und diese entsprechend in der Datenbank abgelegt. Hierdurch kann ohne weiteres der Qualitätsverlauf in Abhängigkeit von der Zeit überprüft werden, und auf Grundlage dieser Information können entsprechende Maßnahmen zur Qualitätsverbesserung ergriffen werden.

Wie oben dargelegt wurde, wird der Abgang des Testpakets von dem ersten Messrechner mit Senden des ersten Bits eines Testpakets zeitlich festgestellt und dem Testpaket als Zeitmarke $t_1$ mitgegeben. Der Eingang des Testpakets beim zweiten Messrechner, also wenn das letzte Bit des Testpakets empfangen wurde, wird von dem zweiten Messrechner als zweite Zeitmarke $t_2$ erfasst. In der Praxis hat sich jedoch gezeigt, dass der Zeitpunkt $t_1$, also der Zeitpunkt, an dem das erste Bit von dem ersten Messrechner gesendet wird, eben nicht dieser definierte Zeitpunkt ist, sondern der Zeitpunkt, an dem das Testpaket an die Protokollsoftware, wie Treiber für die Netzwerkkarte und TCP/IP-Stack, übergeben wird, und $t_2$ nicht der Zeitpunkt ist, an dem das letzte Bit des Testpakets von dem zweiten Messrechner empfangen wird, sondern der Zeitpunkt an dem die Protokoll-Software das Testpaket an das Messprogramm übergibt.

Wie bei jedem Messgerät, muss auch hier ein Messfehler berücksichtigt werden. Er wird durch zufällige Ereignisse im Betriebssystem, wie z. B. Prozessumschaltzeiten, durch gleichzeitiges Eintreffen von Testpaketen usw., verursacht. Damit ergibt sich für die Berechnung der tatsächlichen Verzögerung eines Testpakets:

$D_{netz}=t_1-t_2-D_{soft}-\bullet$ mit $(0 \bullet \bullet \bullet \bullet_{max})$.

$D_{soft}$ repräsentiert den Anteil, der durch die Zeiten verursacht wird, welche die Protokollsoftware und das Betriebssystem auf der Sende- und Empfangsseite der beiden Messrechner für die Verarbeitung der Testpakete benötigt. Dieser konstante Anteil ist abhängig von der verwendeten Hard- und Software. Es muss für jedes Messgerät ermittelt und dem Messprogramm mitgeteilt werden. Daher wird für jeden Messrechner der rechnerbezogene Zeitanteil ermittelt, welche die Software und das Betriebssystem dieses Messrechners benötigen, um das Testpaket im Messrechner zu handhaben, bis die Ausgangs- oder Empfangszeit festgestellt wird. Der rechnerbezogene Zeitanteil wird von der ermittelten Laufzeit abgezogen und das Ergebnis entspricht der wahren Laufzeit, wobei dann die wahre Laufzeit das Messergebnis bildet. Der verbleibende Messfehler • liegt im Bereich von 0 bis $\bullet_{max}$.

Für die Generierung der Zeitmarken, also der Uhrzeit der Ein- und Ausgänge der Testpakete, sind in den Messrechnern GPS-Karten installiert. In den Messrechnern ist ein Messprogramm implementiert. Das Messprogramm auf den Messrechnern hat jedoch keine eigene Bedieneroberfläche, um die Messgenauigkeit der Messrechner nicht negativ zu beeinflussen. Die Messdaten werden nicht lokal auf den Messrechnern abgespeichert, da auch Festplattenzugriffe Einfluss auf die Prozessorlast und damit auf die Messgenauigkeit haben. Das Messprogramm verhält sich passiv, d. h. die Einrichtung der Messverbindungen, das Übertragen der Messdaten und der Status der Messrechner geschieht nur auf Anforderung durch einen separat vorgesehenen Steuerrechner.

Nach einer weiteren Ausführungsform der Erfindung ist daher ein Steuerrechner vorgesehen, der über das Telekommunikationsnetz die Messrechner für die Ermittlung des Messergebnisses steuert, wie Einrichten der Messverbindungen, Veranlassen der Übertragung des Messergebnisses in die Datenbank, Ermittlung des Status der Messrechner und ähnliches.

Damit es nicht zu Verfälschungen der Messergebnisse kommt, werden während der Übertragung von Daten von einem Messrechner zum Steuerrechner keine Testpakete erfasst.

Um auch weitere Qualitätsmerkmale zu überprüfen, werden neben der Laufzeit und den Laufzeitschwankungen auch die Verluste bei der Übertragung der Testpakete durch die Messrechner ermittelt und entsprechend als Messergebnis in der Datenbank abgelegt.

Weitere Vorteile, Merkmale und Anwendungsmöglichkeiten der vorliegenden Erfindung zur Messung der unidirektionalen Übertragungseigenschaften, wie Paketlaufzeit, Laufzeitschwankungen oder ähnliches, in einem Telekommunikationsnetz ergeben sich aus der nachfolgenden Beschreibung in Verbindung mit dem in der Zeichnung dargestellten Ausführungsbeispiel.

Die Erfindung wird im folgenden anhand des in der Zeichnung dargestellten Ausführungsbeispiels näher beschrieben. In der Beschreibung, in den Patentansprüchen, der Zusammenfassung und in der Zeichnung werden die in der hinten angeführten Liste der Bezugszeichen verwendeten Begriffe und zugeordneten Bezugszeichen verwendet.

In der Zeichnung bedeutet:

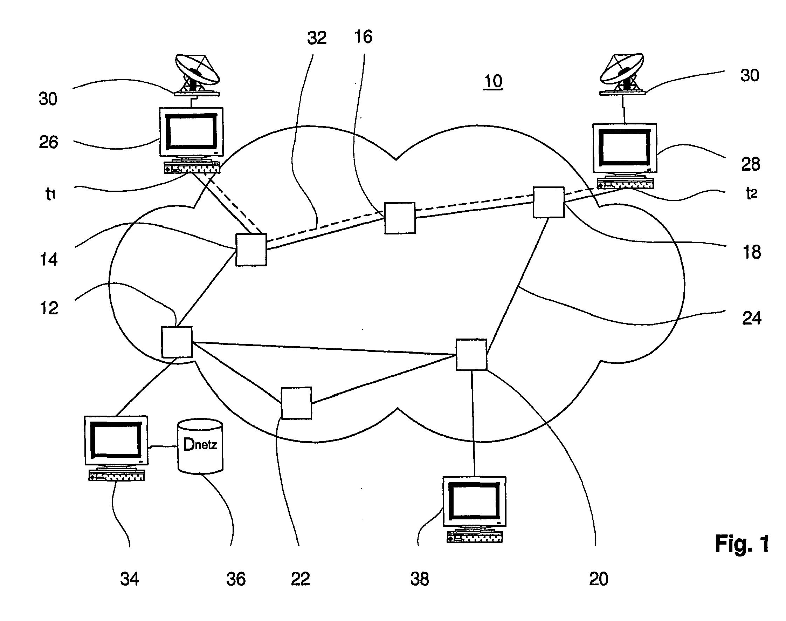

Fig. 1 eine schematische Darstellung eines Telekommunikationsnetzes mit zwei Messrechnern zur Durchführung des Verfahrens nach der Erfindung.

In Fig. 1 ist schematisch ein Telekommunikationsnetz 10 dargestellt, das aus mehreren Vermittlungseinrichtungen 12 bis 22 besteht, die über Verbindungsleitungen 24 miteinander verbunden sind.

Die Vermittlungseinrichtung 14 ist einem ersten Messrechner 26 und die Vermittlungseinrichtung 18 einem zweiter Messrechner 28 zugeordnet. In jedem Messrechner 26, 28 ist ein Messprogramm zur Messung der unidirektionalen Übertragungseigenschaften installiert.

Jeder Messrechner 26, 28 ist mit einer GPS-Antenne (global positioning system) verbunden und mit einer GPS-Karte zur Verarbeitung der über die GPS-Antenne empfangenen Daten versehen. GPS-Antenne und GPS-Karte bilden zusammen die GPS-Einheit 30.

Die Verbindung 24 zwischen dem ersten Messrechner 26, der Vermittlungseinrichtung 14, der Vermittlungseinrichtung 16, der Vermittlungseinrichtung 18 und dem zweiten Messrechner 28 bildet die Messstrecke 32, die strichliert gekennzeichnet ist.

Der Vermittlungseinrichtung 12 ist ein Steuerrechner 34 zugeordnet. Der Steuerrechner 34 wirkt mit einer Datenbank 36 zusammen.

Der Vermittlungseinrichtung 20 ist über die Verbindungsleitung 24 ein weiterer Rechner 38 zugeordnet, der im folgenden als Arbeitsstation bezeichnet wird.

Bei dem Telekommunikationsnetz 10 handelt es sich beispielsweise um das Internet.

Ziel der Messanordnung ist es, zunächst einmal die Paketlaufzeit von dem ersten Messrechner 26 über die Messstrecke 32 zu dem zweiten Messrechner 28 zu ermitteln. Es handelt sich somit um eine unidirektionale Messverbindung, bei der einzelne Testpakete von dem ersten Messrechner 26 zu dem zweiten Messrechner 28 gesendet werden.

Auf der Messstrecke 32 werden nun von dem ersten Messrechner 26 Testpakete mit einer konstanten oder expotentialen zeitlichen Verteilung zum zweiten Messrechner 28 gesendet. Die Testpakete werden dabei mit Hilfe des User Datagram Protocols (UDP) verschickt. Dies ist ein verbindungsloses Internet-Transportprotokoll, das auf IP aufsetzt. Die Testpakete enthalten u. a. Zeitmarken und Sequenznummern.

Um die unidirektionale Laufzeit mit ausreichender Genauigkeit messen zu können, werden die Zeitmarken von der GPS-Einheit 30 generiert. Damit können die Zeitmarken mit einem Fehler von ± 1/2 Mikrosekunden erzeugt werden. Hierbei wird die Zeitmarke vom ersten Messrechner 26 gesetzt, wenn das erste Bit eines Testpakets gesendet wurde. Dies entspricht dem Zeitpunkt $t_1$.

Damit die GPS-Einheiten 30 die exakte Zeit ermitteln können, muss jede GPS-Einheit 30 Signale von mehreren Satelliten (maximal sechs) empfangen. Sinkt die Anzahl der empfangbaren Satelliten z. B. aufgrund einer ungünstigen Wetterlage für längere Zeit auf 1 ab, so wird die interne Uhr nicht synchronisiert. Der erste Messrechner 26 unterbricht in diesem Fall das Senden der Testpakete und generiert eine entsprechende Fehler/Statusmeldung an den Steuerrechner 34.

Wie jedes Messgerät muss auch dieses Messsystem kalibriert werden. Kalibrierung bedeutet in diesem Fall die Ermittlung des konstanten Anteils $D_{soft}$. Hierfür sendet jeder Messrechner 26, 28 nach dem Start seines Messprogramms Testpakete an seine eigene IP-Adresse. Diese Testpakete durchlaufen zweimal den TCP/IP-Stack. Die ermittelte minimale Laufzeit entspricht der doppelten Durchlaufzeit durch den TCP/IP-Stack. Der durch zwei dividierte Wert ist der Kalibrierungswert für diesen Messrechner 26, 28. Für eine Verbindung zwischen dem ersten Messrechner 26 und dem zweiten Messrechner 28 ergibt sich damit für $D_{soft}$ :

$$D_{soft}=CV_{src}+CV_{dest},$$

wobei CV der Kalibrierungswert ist und src für Quelle und somit für den ersten Messrechner 26 und dest für Senke und somit für den zweiten Messrechner 28 steht.

Das Testpaket wird nun über die Messstrecke 32, also über die Verbindungsleitung 24, die Vermittlungsstelle 14, die Vermittlungsstelle 16 und die Vermittlungsstelle 18 zum zweiten Messrechner 28 gesendet. Wenn das letzte Bit des Testpakets beim zweiten Messrechner empfangen wurde, wird die zweite Zeitmarke erfasst. Dies entspricht dem Zeitpunkt $t_2$. Die zweite Zeitmarke $t_2$ wird von dem zweiten Messrechner 28 ebenfalls durch eine GPS-Einheit 30 generiert.

Aus $t_1$ und $t_2$ wird nunmehr unter Berücksichtigung eines rechnerbezogenen zeitanteils $D_{soft}$ die Paketlaufzeit $D_{netz}$ entsprechend der Formel $D_{netz}=t_1-t_2-D_{soft}$ • berechnet und dieser Wert als Messergebnis dem Steuerrechner 34 übermittelt und in der Datenbank 36 ablegt. Über den Monitor des Steuerrechners 34 sind die Ergebnisse fortlaufend online darstellbar.

Um unidirektionale Laufzeitschwankungen feststellen zu können, werden fortlaufend Testpakete von dem ersten Messrechner 26 zu dem zweiten Messrechner 28 in der eben beschriebenen Art und Weise gesendet. Die Laufzeitschwankung ist dabei die Differenz zwischen der gemessenen unidirektionalen Laufzeit eines Testpakets und der gemessenen Laufzeit des vorhergehenden Testpakets, sodass sich folgende Formel

ergibt: $t_{jitter}=D_n-D_{n-1}$, wobei $D_n$ die unidirektionale Laufzeit des Testpakets n und $D_{n-1}$ die Laufzeit des Paketes n-1 ist und $t_{jitter}$ die Laufzeitschwankung.

Zudem können noch über die Messrechner 26, 28 und über den Steuerrechner 34 Paketverluste ermittelt und dargestellt werden.

Damit nun jeder berechtigte Nutzer die Möglichkeit hat, die Qualität der Verbindung von dem ersten Messrechner 26 zu dem zweiten Messrechner 28 abzufragen, kann er dies beispielsweise von seiner Arbeitsstation 38. Er wählt sich hierfür über das Internet in die Datenbank 36 ein, übermittelt seine Kennung und, bei Übereinstimmen der Kennung, kann er die Daten, wie Paketlaufzeit, Laufzeitschwankung, Paketverluste oder ähnliches, abfragen. Das Messergebnis in der Datenbank enthält dabei das Erstellungsdatum, den Namen des ersten Messrechners, die IP-Adresse des ersten Messrechners, den Namen des zweiten Messrechners, die IP-Adresse des zweiten Messrechners sowie die Portnummer. Das Format der Messwertdateien sieht dabei wie folgt aus:

Status-Zeitstempel-Paketlaufzeit-Sequenznummer-Paketlänge-TOS.

Der Status gibt an, ob der Zeitstempel und der Wert für die Paketlaufzeit gültig sind. Ist der Statuswert ungleich 0, so sind nur die Werte Sequenznummer, die für die Verlustberechnung erforderlich ist, die Paketlänge und TOS gültig. Der Zeitstempel gibt den Zeitpunkt an, an dem das Testpaket von dem zweiten Messrechner 28 an den Steuerrechner 34 abgesendet wurde.

Pro Messverbindung mit einem mittleren Paketabstand von einer Sekunde muss bei einer Datenlänge von ca. 50 Byte mit einem Datenvolumen von etwa 4,3 Megabyte pro Tag gerechnet werden.

Die Erfindung zeichnet sich durch die einfache Möglichkeit aus, über die Synchronisation die Uhren der beiden Messrechner 26, 28 eine ausreichend genaue Messung zur Erfassung der Paketlaufzeit, der Laufzeitschwankungen und ähnliches durchzuführen.

**BEZUGSZEICHENLISTE**

| | |
|---|---|
| 10 | Telekommunikationsnetz |
| 12 | Vermittlungseinrichtung |
| 14 | Vermittlungseinrichtung |
| 16 | Vermittlungseinrichtung |
| 18 | Vermittlungseinrichtung |
| 20 | Vermittlungseinrichtung |
| 22 | Vermittlungseinrichtung |
| 24 | Verbindungsleitung |
| 26 | erster Messrechner |
| 28 | zweiter Messrechner |
| 30 | GPS-Einheit |
| 32 | Messstrecke |

| | |
|---|---|
| 34 | Steuerrechner |
| 36 | Datenbank |
| 38 | weiterer Rechner, Arbeitsstation |
| $D_{netz}$ | Paketlaufzeit |
| $D_{soft}$ | rechnerbezogener Zeitanteil - insgesamt |
| $t_{jitter}$ | Laufzeitschwankung |
| $t_1$ | Zeitmarke des Abgangs des Testpakets |
| $t_2$ | Zeitmarke des Eingangs des Testpakets |
| • | Messfehler |
| $CV_{src}$ | rechnerbezogener Zeitanteil - erster Messrechner |
| $CV_{dest}$ | rechnerbezogener Zeitanteil - zweiter Messrechner |

**Patentansprüche**

1. Verfahren zur Messung der unidirektionalen Übertragungseigenschaften in einem Telekommunikationsnetz (10) zwischen zumindest zwei Messrechnern. (26, 28), bei dem Testpakete von einem ersten Messrechner (26) zu einem anderen zweiten Messrechner (28) übertragen werden, der erste Messrechner (26) den zeitlichen Abgang ($t_1$) des abgehenden Testpakets erfasst und diese Uhrzeit mit dem Testpaket mit übermittelt und der zweite Messrechner (28) den zeitlichen Eingang ($t_2$) des Testpakets erfasst und durch Differenzbildung zwischen der Uhrzeit des Abgangs von dem ersten Messrechner (26) und der Uhrzeit des Eingangs in dem zweiten Messrechner (28) die Laufzeit ($D_{netz}$) des Testpakets ermittelt, wobei die beiden Messrechner (26, 28) für die Ermittlung der Laufzeit des Testpakets zeitlich synchronisiert werden, indem durch Satellitensysteme (30) beiden Messrechnern (26,28) fortlaufend die von mehreren Satelliten gesendete Uhrzeit übermittelt wird, **dadurch gekennzeichnet, dass** fortlaufend Testpakete von dem ersten Messrechner (26) zu dem zweiten Messrechner (28) übermittelt werden, während dessen der zeitliche Abstand des Abgangs der Testpakete von dem ersten Rechner variiert wird.

2. Verfahren, nach Anspruch 1, **dadurch gekennzeichnet, dass** der zeitliche Abgang ($t_1$) und der zeitliche Eingang ($t_2$) durch eine Satelliten-Einheit (30) in Mikrosekundenauflösung gebildet werden.

3. Verfahren nach Anspruch 2, **dadurch gekennzeichnet, dass** der von der Satelliten-Einheit (30) gebildete zeitliche Abgang ($t_1$) und der zeitliche Eingang ($t_2$) mit einem Messfehler von $\pm$ 1/2 Mikrosekunden gebildet werden.

4. Verfahren nach einem der vorangehenden Ansprüche, **dadurch gekennzeichnet, dass** die Laufzeit ($D_{netz}$) des Testpakets in einer Datenbank (36) abgelegt wird.

5. Verfahren nach Anspruch 4, **dadurch gekennzeichnet, dass** die Laufzeit ($D_{netz}$) von der Datenbank (36) über das Telekommunikationsnetz (10) durch einen Nutzer abgefragt wird.

6. Verfahren nach Anspruch 5, **dadurch gekennzeichnet, dass** für den Nutzer in der Datenbank (36) eine Kennung hinterlegt ist und nach Übermittlung der Kennung durch den Nutzer die Abfrage der Messergebnisse von der Datenbank (36) freigegeben wird.

7. Verfahren nach einem der Ansprüche 4 bis 6, **dadurch gekennzeichnet, dass** von dem zweiten Messrechner (28) die Laufzeit ($D_{netz}$) des Testpakets über das Telekommunikationsnetz (10) zur Datenbank (36) übermittelt werden.

8. Verfahren nach einem der vorangehenden Ansprüche, **dadurch gekennzeichnet, dass** zur Feststellung Laufzeitschwankungen mindestens zwei Testpakete hintereinander von dem ersten Messrechner (26) zu dem zweiten Messrechner (28) gesandt werden.

9. Verfahren nach einem der vorangehenden Ansprüche, **dadurch gekennzeichnet, dass** den Laufzeiten ($D_{netz}$) der Testpakete Datums- und Uhrzeitangaben zugeordnet und diese entsprechend in der Datenbank (36) abgelegt werden, sodass erkennbar ist, zu welchen Zeitpunkten es zu welchen Messergebnissen kam.

10. Verfahren nach einem der vorangehenden Ansprüche, **dadurch gekennzeichnet, dass** für jeden Messrechner (26, 28) der rechnerbezogene Zeitanteil ermittelt wird, welche die Software und das Betriebssystem dieses Messrechners (26, 28) benötigt, um das Testpaket im Messrechner (26, 28) zu handhaben, bis der zeitliche Abgang ($t_1$) oder der zeitliche Eingang ($t_2$) festgestellt wird.

11. Verfahren nach Anspruch 10, **dadurch gekennzeichnet, dass** der rechnerbezogene Zeitanteil ($D_{soft}$) von der Laufzeit abgezogen wird und das Ergebnis der wahren Laufzeit ($D_{netz}$) entspricht, wobei dann die wahre Laufzeit ($D_{netz}$) in der Datenbank abgelegt wird.

12. Verfahren nach einem der vorangehenden Ansprüche, **dadurch gekennzeichnet, dass** ein Steuerrechner (34) vorgesehen ist, der über das Telekommunikationsnetz (10) die Messrechner (26, 28) für die Ermittlung der Laufzeit der Testpakete steuert.

13. Verfahren nach Anspruch 12, **dadurch gekennzeichnet, dass** während der Übertragung von Daten von einem Messrechner (26, 28) zum Steuerrechner (34) keine Laufzeit von Testpaketeten erfasst wird.

14. Verfahren nach einem der vorangehenden Ansprüche, **dadurch gekennzeichnet, dass** neben der Laufzeit ($D_{netz}$) und den Laufzeitschwankungen auch die Verluste bei der Übertragung der Testpakete ermittelt und in der Datenbank (36) abgelegt werden.

**Claims**

1. Method for measuring unidirectional transmission properties in a telecommunications network (10) between at least two measurement computers (26, 28), where test packets are transmitted from a first measurement computer (26) to another, second measurement computer (28), the first measurement computer (26) records the departure time ($t_1$) of the outgoing test packet and transmits this clock time along with the test packet, and the second measurement computer (28) records the arrival time ($t_2$) of the test packet and, in a subtraction operation between the departure time from the first measurement computer (26) and the arrival time at the second measurement computer (28), determines the transit time ($D_{netz}$) of the test packet, wherein to determine the transit time of the test packet the two measurement computers (26, 28) are synchronized in time in that the clock time transmitted from multiple satellites is continuously communicated to the two measurement computers (26, 28) through satellite systems (30), **characterized in that** test packets are continuously transmitted from the first measurement computer (26) to the second measurement computer (28) while the time interval of the departure of the test packets from the first computer is varied.

2. Method according to claim 1, **characterized in that** the departure time ($t_1$) and the arrival time ($t_2$) are determined by a satellite unit (30) with microsecond resolution.

3. Method according to claim 2, **characterized in that** the departure time ($t_1$) determined by the satellite unit (30) and the arrival time ($t_2$) are determined with a measurement error of $\pm$ ½ microsecond.

4. Method according to any one of the preceding claims, **characterized in that** the transit time ($D_{netz}$) of the test packet is stored in a database (36).

5. Method according to claim 4, **characterized in that** the transit time ($D_{netz}$) is queried by a user from the database (36) over the telecommunications network (10).

6. Method according to claim 5, **characterized in that** an identifier is stored for the user in the database (36), and after transmission of the identifier by the user, the query of the measurement results is released by the database (36).

7. Method according to any one of claims 4 through 6, **characterized in that** the transit time ($D_{netz}$) of the test packet is transmitted from the second measurement computer (28) through the telecommunications network (10) to the database (36).

8. Method according to any one of the preceding claims, **characterized in that** at least two test packets are sent one after the other from the first measurement computer (26) to the second measurement computer (28) in order to identify transit time variations.

9. Method according to any one of the preceding claims, **characterized in that** date and time information are associated with the transit times ($D_{netz}$) of the test packets and are stored accordingly in the database (36), so that it is possible to determine what measurement results occurred at what points in time.

10. Method according to any one of the preceding claims, **characterized in that**, for each measurement computer (26, 28), the computer-specific time component that is required by the software and operating system of this measurement computer (26, 28) to process the test packet in the measurement computer (26, 28) is determined before the departure time ($t_1$) or the arrival time ($t_2$) is determined.

11. Method according to claim 10, **characterized in that** the computer-specific time component ($D_{soft}$) is subtracted from the transit time and the result represents the true transit time ($D_{netz}$), with the true transit time ($D_{netz}$) then being stored in the database.

12. Method according to any one of the preceding claims, **characterized in that** a control computer (34) is provided which, via the telecommunications network (10), controls the measurement computers (26, 28) for determining the transit time of the test packets.

13. Method according to claim 12, **characterized in that** the transit time of test packets is not measured during the transmission of data from a measurement computer (26, 28) to the control computer (34).

14. Method according to any one of the preceding claims, **characterized in that** losses in transmission of the test packets are also determined and stored in the database (36) along with the transit time ($D_{netz}$) and the transit time variations.

## Revendications

1. Procédé de mesure des caractéristiques de transmission unidirectionnelle dans un réseau de télécommunications (10) entre au moins deux calculateurs de mesure (26, 28), dans lequel des paquets de test sont transmis d'un premier calculateur de mesure (26) à un deuxième calculateur de mesure (28), le premier calculateur de mesure (26) enregistrant le moment de l'émission ($t_1$) du paquet de test sortant et transmettant ce moment enregistré avec le paquet de test, et le deuxième calculateur (28) enregistrant le moment de la réception ($t_2$) du paquet de test et déterminant le temps de propagation ($D_{réseau}$) du paquet de test par formation de la différence entre l'heure de l'émission par le premier calculateur de mesure (26) et l'heure de la réception par le deuxième calculateur de mesure (28), les deux calculateurs de mesure (26, 28) étant synchronisés dans le temps pour la détermination du temps de propagation du paquet de test moyennant des systèmes par satellites (30) qui transmettent en continu aux deux calculateurs de mesure (26, 28) l'heure émise par plusieurs satellites, **caractérisé en ce que** des paquets de test sont transmis en continu par le premier calculateur de mesure (26) au deuxième calculateur de mesure (28), pendant que l'intervalle de temps de l'émission des paquets de test par le premier calculateur varie.

2. Procédé selon la revendication 1, **caractérisé en ce que** le moment de l'émission ($t_1$) et le moment de la réception ($t_2$) sont constitués par une unité de satellites (30) avec une résolution en microsecondes.

3. Procédé selon la revendication 2, **caractérisé en ce que** le moment de l'émission ($t_1$) et le moment de la réception ($t_2$) constitués par l'unité de satellites (30) sont constitués avec une erreur de mesure de $\pm$ ½ microseconde.

4. Procédé selon l'une des revendications précédentes, **caractérisé en ce que** le temps de propagation ($D_{réseau}$) du paquet de test est stocké dans une base de données (36).

5. Procédé selon la revendication 4, **caractérisé en ce que** le temps de propagation ($D_{netz}$) est consulté par un utilisateur dans la base de données (36) par l'intermédiaire du réseau de télécommunications (10).

6. Procédé selon la revendication 5, **caractérisé en ce qu'**une identification d'usager est déposé dans la base de données (36) et la consultation des résultats de mesure dans la base de données (36) est autorisée après transmission de l'identification par l'usager.

7. Procédé selon l'une des revendications 4 à 6, **caractérisé en ce que** le deuxième calculateur de mesure (28) transmet le temps de propagation ($D_{réseau}$) du paquet de test à la base de données (36) par l'intermédiaire du réseau de télécommunications (10).

8. Procédé selon l'une des revendications précédentes, **caractérisé en ce qu'**au moins deux paquets de tests sont envoyés l'un après l'autre par le premier calculateur de mesure (26) au deuxième calculateur de mesure (28) pour déterminer les variations du temps de propagation.

9. Procédé selon l'une des revendications précédentes, **caractérisé en ce que** des informations de date et d'heure sont associées aux temps de propagation ($D_{réseau}$) des paquets de test et stockées dans la base de données (36), permettant de savoir à quels moments quels résultats de mesure ont été obtenus.

10. Procédé selon l'une des revendications précédentes, **caractérisé en ce qu'**on détermine, pour chacun des calculateurs de mesure (26, 28), la proportion de temps rapportée au calculateur, nécessaire au logiciel et au système d'exploitation dudit calculateur de mesure (26, 28) pour gérer le paquet de test dans le calculateur de mesure (26, 28) jusqu'à ce que soit déterminé le moment de l'émission ($t_1$) ou le moment de la réception ($t_2$).

11. Procédé selon la revendication 10, **caractérisé en ce que** la proportion de temps ($D_{soft}$) rapportée au calculateur est déduite du temps de propagation et le résultat correspond au temps de propagation ($D_{réseau}$) effectif, le temps de propagation ($D_{réseau}$) effectif étant stocké dans la base de données.

12. Procédé selon l'une des revendications précédentes, **caractérisé en ce qu'**un calculateur de commande (34) est prévu qui commande les calculateurs de mesure (26, 28) par l'intermédiaire du réseau de télécommunications (10) pour la détermination du temps de propagation des paquets de test.

13. Procédé selon la revendication 12, **caractérisé en ce qu'**aucun temps de propagation de paquets de test n'est enregistré au cours de la transmission de données d'un calculateur de mesure (26, 28) au calculateur de commande (34).

14. Procédé selon l'une des revendications précédentes, **caractérisé en ce que**, outre le temps de propagation ($D_{réseau}$) et les variations du temps de propagation, les pertes lors de la transmission des paquets de test sont déterminées et stockées dans la base de données (36).

Fig. 1

EP 1 382 126 B1